# DEMANDE DE BREVET EUROPEEN

(11) **EP 2 806 386 A1**
(43) Date de publication de la demande: **26.11.2014**
(21) Numéro de dépôt: 13168969.7
(22) Date de dépôt: 23.05.2013
(51) Int. Cl.: G06Q 10/10, G06Q 30/02, G06F 17/30

(54) **Procédé et systeme pour signaler automatiquement un évènement à partir de fichiers reçus sur un serveur informatique**

(71) Demandeur: Let Network Incorporated, San Francisco, CA 94170 (US)
(72) Inventeur: Colon, François, 13013 Marseille (FR)
(74) Mandataire: Roman, Alexis

(57) **Abrégé**

L'invention concerne un procédé pour signaler automatiquement un évènement à partir de fichiers reçus sur un serveur informatique, ledit procédé consistant à :
- acquérir, sous forme de fichier numérique (F1), une photo et/ou vidéo,
- associer au fichier (F1) acquis : une information de géo-localisation (l1), et une information d'horodatage (t1),
- transférer le fichier (F1) et les informations de géo-localisation (l1) et d'horodatage (t1) associées, vers un serveur informatique (S) distant,
- créer une fenêtre d'analyse qui détermine :
o une zone géographique définie autour du lieu où la photo et/ou la vidéo a été acquise,
o une zone temporaire définie à partir du moment où la photo et/ou la vidéo a été acquise,

- acquérir d'autres fichiers (F2, F3) numériques photos et/ou vidéos et leur associer des informations de géo-localisation (l2, l3) et d'horodatage (t2, t3), puis transférer ces fichiers (F2, F3) et ces informations (l2, l3, t2, t3) au serveur distant (S),
- analyser la variation de la fréquence du nombre de fichiers reçus par le serveur distant (S) dans la fenêtre d'analyse, pour signaler automatiquement un évènement.

## Description

### Domaine technique de l'invention.

L'invention concerne un procédé et un système pour signaler automatiquement un évènement à partir de fichiers reçus sur un serveur informatique.

L'invention concerne le domaine général des techniques de traitement de données disparates, dans le but de définir automatiquement un évènement, c'est-à-dire un fait ou une situation notable qui n'est pas habituel (par exemple : spectacles, rencontres sportives, manifestations, ....) et/ou qui déclenche un comportement inhabituel d'un usage (par exemple : prise photos ou de vidéo) et/ou qui est susceptible d'intéresser une communauté d'utilisateurs.

### État de la technique.

Lorsqu'un évènement intervient (par exemple un concert, un défilé, une manifestation, un mariage, un accident, ....), il est courant que plusieurs personnes acquièrent des photos et/ou des vidéos avant de les envoyer à des contacts, ou les poster sur Internet et notamment des réseaux sociaux tels que Facebook®, Twitter®, FlckR®, etc.

Lorsque plusieurs personnes postent dans un même lieu, et au même moment, des photos et/ou des vidéos relatives à un événement, il peut être avantageux de pouvoir déceler automatiquement cet événement.

On connait par le document brevet WO2012/112449 (GOOGLE) une technique permettant une reconnaissance d'événement automatique et un regroupement de photos. Cette technique consiste à recevoir, d'un premier utilisateur, des premières données d'image correspondant à une première photo, à recevoir, d'un second utilisateur, des secondes données d'image correspondant à une seconde photo, à comparer les premières données d'image et les secondes données d'image, et à déterminer que les première et seconde photos correspondent à un événement coïncident d'après la comparaison. Cette technique est donc basée sur une comparaison des caractéristiques communes aux deux photos reçues : photos acquises sensiblement au même moment et/ou sensiblement au même endroit et/ou comportant des éléments visuels identiques, etc.

Bien qu'efficace, cette technique présente certains désavantages ou limites. Tout d'abord, le logiciel développé est complexe à réaliser, relativement lent à s'exécuter, renferme potentiellement un nombre élevé d'erreurs informatiques, et nécessite de mobiliser des ressources informatiques importantes dans le serveur.

Ensuite, une comparaison de photos acquises sensiblement au même moment et/ou sensiblement au même endroit et/ou comportant des éléments visuels identiques, n'est pas suffisante pour déterminer systématiquement un évènement. Prenons le cas où chacun des utilisateurs acquiert une photo de la tour Eiffel à Paris (France), sensiblement au même moment. En mettant en oeuvre le procédé divulgué dans le document brevet WO2012/112449, le serveur en déduira qu'il s'agit d'un événement. Alors qu'il n'en est rien, la tour Eiffel étant simplement un lieu touristique très fréquenté à Paris (France) et ne constitue pas en tant que tel un évènement. Les critères retenus pour définir un évènement sont donc insuffisants.

L'invention a pour objectif de remédier à cet état des choses. En particulier, un objectif de l'invention est de proposer une technique d'analyse basée sur des paramètres plus fiables que la simple comparaison de caractéristiques communes à des photos reçues.

Un autre objectif de l'invention est de proposer une technique permettant de reconnaitre de façon plus sûre et plus certaine un événement, avec davantage de pertinence.

L'invention a également pour objectif de proposer une technique d'analyse qui soit plus simple à développer et qui nécessite de mobiliser moins de ressources informatiques dans le serveur.

### Divulgation de l'invention.

La solution proposée par l'invention est un procédé pour signaler automatiquement un évènement à partir de fichier reçus sur un serveur informatique, ledit procédé consistant à :
- acquérir, sous forme de fichier numérique, une photo et/ou vidéo depuis un terminal mobile,
- associer au fichier acquis :
   ○ une information de géo-localisation pour localiser le lieu où la photo et/ou la vidéo a été acquise,
   ○ une information d'horodatage pour associer une date et une heure au moment où ladite photo et/ou ladite vidéo a été acquise,
- transférer le fichier et les informations de géo-localisation et d'horodatage associées, vers un serveur informatique distant du terminal mobile.
- créer, dans le serveur distant, une fenêtre d'analyse qui détermine :
   ○ une zone géographique définie autour du lieu où la photo et/ou la vidéo a été acquise, ladite zone géographique étant définie en prenant comme référence l'information de géo-localisation,
   ○ une zone temporaire définie à partir du moment où la photo et/ou la vidéo a été acquise, ladite zone temporaire étant définie en prenant comme référence l'information d'horodatage,
- acquérir d'autres fichiers numériques photo et/ou vidéo et leur associer des informations de géo-localisation et d'horodatage, puis transférer ces fichiers et ces informations au serveur distant,
- analyser la variation de la fréquence du nombre de fichiers reçus par le serveur distant dans la fenêtre d'analyse, pour signaler automatiquement un évènement.

La détermination d'un événement est ici basée sur une analyse de la fréquence du nombre de fichiers reçus par le serveur distant, contrairement au document brevet WO2012/112449 dans lequel on comparait seulement les caractéristiques communes aux photos reçues. C'est maintenant la « concentration » de fichiers reçus dans une zone géographique, et sur une période prédéterminée, qui est étudiée. En d'autres termes, selon l'invention, on analyse l'activité des utilisateurs par unité de temps et de lieu.

En reprenant le cas de la tour Eiffel à Paris (France) : ce lieu étant hautement touristique, le serveur recevra en temps normal par exemple entre 100 photos/heure et 200 photos/heure, entre 8h du matin et 18h du soir. Si durant cette période, par exemple à 10h du matin, le serveur reçoit 1000 photos/heure, ce changement de fréquence indiquera de manière certaine qu'un évènement est en train de se dérouler à cet endroit.

D'autres étapes remarquables du procédé objet de l'invention sont listées ci-dessous, chacune de ces étapes pouvant être considérée seule ou en combinaison, indépendamment des étapes remarquables définies ci-dessus :
- l'analyse de la variation de la fréquence du nombre de fichiers reçus par le serveur distant dans la fenêtre d'analyse, comprend la succession d'étapes suivantes :
   ○ calcul d'une fréquence moyenne des fichiers reçus dans la fenêtre d'analyse,
   ○ identification d'une variation significative de la fréquence moyenne calculée lorsque la fréquence des fichiers reçus dans la fenêtre d'analyse varie d'un pourcentage prédéfini par rapport à ladite fréquence moyenne.
- le nombre de fichiers antérieurement envoyés par un utilisateur, au serveur distant, et en dehors de la fenêtre d'analyse, peut être un paramètre pris en compte pour l'identification d'une variation significative de la fréquence moyenne.
- le nombre de fichiers antérieurement envoyés au serveur distant, depuis un lieu géographique pré-localisé, et en dehors de la fenêtre d'analyse, peut être un paramètre pris en compte pour l'identification d'une variation significative de la fréquence moyenne.
- on peut écarter de l'analyse, ou affecter d'un coefficient pondérateur, les fichiers émis par un utilisateur qui a pour habitude d'avoir une fréquence de transfert de fichiers élevée.
- l'étape de signalisation automatique d'un évènement peut comprendre une étape consistant à associer une information caractéristique à tous les fichiers reçus dans la fenêtre d'analyse, après et/ou immédiatement avant cet événement.
- l'étape de signalisation automatique d'un évènement peut comprendre une étape consistant à regrouper dans une zone du serveur distant, tous les fichiers qui sont associés à l'information caractéristique.
- l'étape de signalisation automatique d'un évènement peut comprendre une étape d'avertissement consistant à générer, depuis le serveur distant, un signal d'avertissement et à transmettre ce signal à tous les terminaux mobiles dont sont issus les fichiers reçus dans la fenêtre d'analyse.
- l'étape de transfert des fichiers et des informations de géo-localisation et d'horodatage associées, vers le serveur distant, peut se faire au moyen d'un programme informatique enregistré dans les terminaux mobiles, lequel programme est téléchargé dans lesdits terminaux suite à la connexion de ces derniers à un serveur Internet. Dans ce cas, l'étape de signalisation automatique d'un évènement peut comprendre une étape d'avertissement consistant à générer, depuis le serveur distant, un signal d'avertissement et à transmettre ce signal à tous les terminaux mobiles dans lesquels est enregistré ce programme informatique.
- l'étape de signalisation automatique d'un évènement peut comprendre une étape d'avertissement consistant à générer, depuis le serveur distant, une page internet dédiée à l'évènement, laquelle page comprend une interface sur laquelle sont visualisables toutes les photos et/ou vidéos issues des fichiers reçus dans la fenêtre d'analyse, durant l'événement. Cette page internet peut comprendre une zone pour noter et/ou commenter ledit événement et/ou une ou plusieurs zones pour noter et/ou commenter chaque photo et/ou vidéo visualisable.
- en complément des informations de géo-localisation et des informations d'horodatage associées aux fichiers photos et/ou vidéos, des informations de commentaires peuvent également être associées auxdits fichiers.

Un autre aspect de l'invention concerne un système pour signaler automatiquement un évènement à partir de fichier reçus sur un serveur informatique, ledit système comprenant :
- des terminaux mobiles intégrant :
   ○ un moyen pour acquérir, sous forme de fichier numérique, une photo et/ou une vidéo,
   ○ un programme informatique comprenant des instructions pour générer une information de géo-localisation pour localiser le lieu où la photo et/ou la vidéo a été acquise, et pour générer une information d'horodatage pour associer une date et une heure au moment où ladite photo et/ou ladite vidéo a été acquise,
   o un moyen pour transférer le fichier photo et/ou vidéo et les informations de géo-localisation et d'horodatage associées, vers un serveur informatique distant des terminaux mobiles,
- le serveur distant intégrant un programme informatique comprenant des instructions pour :
   ○ créer une fenêtre d'analyse qui dépend :
      ■ 'une zone géographique définie autour du lieu où la première photo et/ou vidéo a été acquise, ladite zone géographique étant définie en prenant comme référence l'information de géo-localisation associée à ladite première photo et/ou vidéo,
      ■ d'une zone temporaire définie à partir du moment où la première photo et/ou la vidéo a été acquise, ladite zone temporaire étant définie en prenant comme référence l'information d'horodatage associée à ladite première photo et/ou vidéo,
   ○ analyser la variation de la fréquence du nombre de fichiers reçus par le serveur distant dans la fenêtre d'analyse, pour signaler automatiquement un évènement.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 schématise un exemple de système conforme à l'invention,
- la figure 2 est un graphique montrant, un exemple de fenêtre d'analyse, et sur lequel des données de géo localisation sont reportées sur l'axe des ordonnées et des données temporelles sont reportées sur l'axe des abscisses,
- la figure 3 est un graphique montrant, pour un lieu géographique donné, un exemple de variation de la fréquence des fichiers reçus par le serveur distant (axe des ordonnées) en fonction du temps (axe des abscisses),
- la figure 4 schématise un exemple de page internet dédiée à un évènement susceptible d'être générée depuis le serveur distant.

### Modes préférés de réalisation de l'invention.

Le procédé objet de l'invention permet de signaler automatiquement un évènement. Il s'applique préférentiellement à des communautés d'utilisateurs, par exemple des communautés sociales type Facebook®, Twitter®, FlickR ®, des communautés de messagerie instantanée par exemple YAHOO® ou MSN®, etc. En acquièrent des photos et/ou des vidéos, les membres U1, U2, U3 de cette communauté contribuent à définir un évènement. Et lorsqu'un évènement est détecté, chacun des membres de la communauté peut être automatiquement alerté.

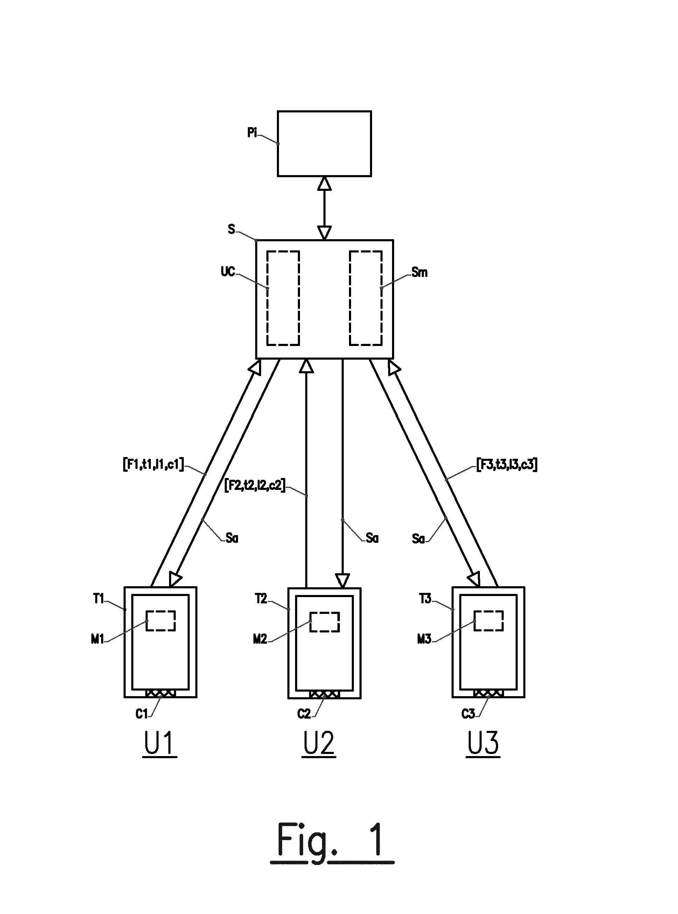

En se rapportant à la figure 1, un premier utilisateur U1 qui se trouve à un instant donné et dans un lieu donné, acquiert, sous forme de fichier numérique F1, une photo et/ou vidéo (ou média) depuis un terminal mobile T1. Ce dernier, ainsi que les terminaux T2, T3 qui sont décrits plus après, sont des téléphones mobiles, des tablettes tactiles, des appareils du type assistant digital personnel (PDA), des caméras, des appareils photos numériques, des ordinateurs portables, ou tout autre terminal pourvu d'un appareil C1, C2, C3 de capture photo et/ou vidéo capable d'enregistrer une photo et/ou une vidéo sous forme de fichier numérique. Ce fichier numérique F1 (respectivement F2, F3) peut être stocké dans une mémoire M1 (respectivement M2, M3) lisible du terminal mobile T1 (respectivement T2, T3), et peut être copié et distribué par voie électronique. Les mémoires M1, M2, M3 sont par exemple du type mémoire flash, EPROM, EEPROM, carte mémoire amovible, CD-ROM, etc. Ce type de terminal est bien connu de l'homme du métier.

Le terminal T1 (ainsi que les autres terminaux T2, T3) intègre un processeur ou microprocesseur, une ou plusieurs zones mémoires et tout autre composant permettant de le faire fonctionner. En particulier, il comprend un ou plusieurs programmes informatiques stockés dans une de ses zones mémoires, le(s)dit(s) programme(s) comprenant des instructions qui, lorsqu'elles sont exécutées par le processeur, permettent de réaliser différentes étapes et/ou fonctionnalités décrites ci-après. Ces programmes informatiques (aussi nommés logiciels, applications informatiques, lignes de codes, softwares) peuvent être écrits dans toute forme de langage de programmation convenant à l'homme du métier.

Le terminal T1 intègre en particulier un programme informatique dont les instructions permettent d'associer au fichier F1 acquis : une information de géo-localisation I1 et une information d'horodatage t1 (ou Timestaming en anglais). Ce programme permet en outre de se connecter au serveur distant S pour transférer toutes ces données comme cela est explicité plus après dans la description.

Selon un mode préféré de réalisation, ce programme informatique spécifique peut être soit initialement enregistré dans la zone mémoire du terminal mobile T1 dès la conception de ce dernier, soit être téléchargé ultérieurement. Par exemple, ce programme peut être téléchargé dans le terminal mobile T1 suite à la connexion de ce dernier à un serveur Internet. En particulier, il peut être téléchargé en réponse à l'inscription de l'utilisateur U1 à une communauté d'utilisateurs. Et de manière plus générale, le terminal mobile T1, T2, T3 de chaque membre U1, U2, U3 de la communauté intègre ce programme informatique spécifique.

L'information de géo-localisation I1 a pour fonction de localiser le lieu où la photo et/ou la vidéo a été acquise. Cette information I1 peut par exemple consister en des coordonnées GPS définies grâce à un système de positionnement par satellites et un récepteur GPS intégré dans le terminal.

L'information d'horodatage t1 permet d'associer une date et une heure au moment où la photo et/ou la vidéo a été acquise. Cette information t1 peut par exemple consister en une date et une heure d'acquisition définie grâce à une horloge intégrée dans le terminal T1.

Ces informations de géo-localisation I1 et d'horodatage t1 consistent en des données numériques qui sont préférentiellement automatiquement associées au fichier F1 dès son acquisition. On peut toutefois prévoir que cette association ne puisse être initiée que par l'appui sur une touche spécifique du terminal T1.

Le fichier F1 et les informations de géo-localisation I1 et d'horodatage t1 associées sont ensuite transmis vers un serveur informatique S distant du terminal mobile T1. Le terminal T1 se connecte d'une manière classique au serveur S, en utilisant des moyens de communications tels que : Internet, GSM (pour l'acronyme anglais Global System for Mobile communication), SMS (pour l'acronyme Anglais Short Message Service), MMS (pour l'acronyme anglais Multimedia Messaging Service), ou tout autre réseau similaire. Le terminal T1 et le serveur S intègre chacun l'ensemble des ressources matériels, en particulier des moyens d'émission/réception, et logiciels permettant un échange d'informations entre eux, par ondes radio, Wifi, Bluetooth, canal privé VPN, ou autre, lequel échange peut être sécurisé ou non. La transmission du fichier F1 et ses informations de géo-localisation I1 et d'horodatage t1, peut être effectuée automatiquement, sans intervention de l'utilisateur, dès que ce dernier a acquis ledit fichier. De manière alternative, il est également possible de d'effectuer la transmission du fichier F1 de la même manière qu'une publication de photos et/ou de vidéos sur un réseau social, par exemple en sélectionnant une fonction et/ou une touche « PUBLIER » sur le terminal T1.

En complément de l'information de géo-localisation I1 et de l'information d'horodatage t1, d'autres informations peuvent être associées au fichier F1. Une information de commentaire peut notamment être associée audit fichier. L'utilisateur U1 peut par exemple commenter sa photo et/ou vidéo en indiquant les conditions de son acquisition (ex : « *La tour Eiffel sous la neige* », *« Concert de David Bowie au pied de la tour Eiffel* »*,* « *Mariage de Marie et Paul au pied de la tour Eiffel* »*,* etc). Une information permettant d'identifier l'utilisateur U1 peut encore être associée au fichier F1, en particulier un identifiant unique qui lui est propre. Toutes ces données supplémentaires se présentent également sous la forme de données numériques.

Le serveur distant S est typiquement un ordinateur relié à un réseau de communication et intégrant un processeur ou microprocesseur UC, une ou plusieurs zones mémoires Sm (par exemple : mémoire flash, EPROM, EEPROM, carte mémoire amovible, CD-ROM, ....) et tout autre composant permettant de le faire fonctionner. En particulier, il comprend un ou plusieurs programmes informatiques stockés dans une de ses zones mémoires Sm, le(s)dit(s) programme(s) comprenant des instructions qui, lorsqu'elles sont exécutées par le processeur UC, permettent de réaliser différentes étapes et/ou fonctionnalités décrites ci-après. Ces programmes informatiques (aussi nommés logiciels, applications informatiques, lignes de codes, softwares) peuvent être écrits dans toute forme de langage de programmation convenant à l'homme du métier.

En particulier, dès réception du fichier F1 et des informations de géo-localisation I1 et d'horodatage t1, le serveur distant S met en oeuvre un programme pour créer une fenêtre d'analyse FA qui détermine : une zone géographique ZG et une zone temporaire ZT.

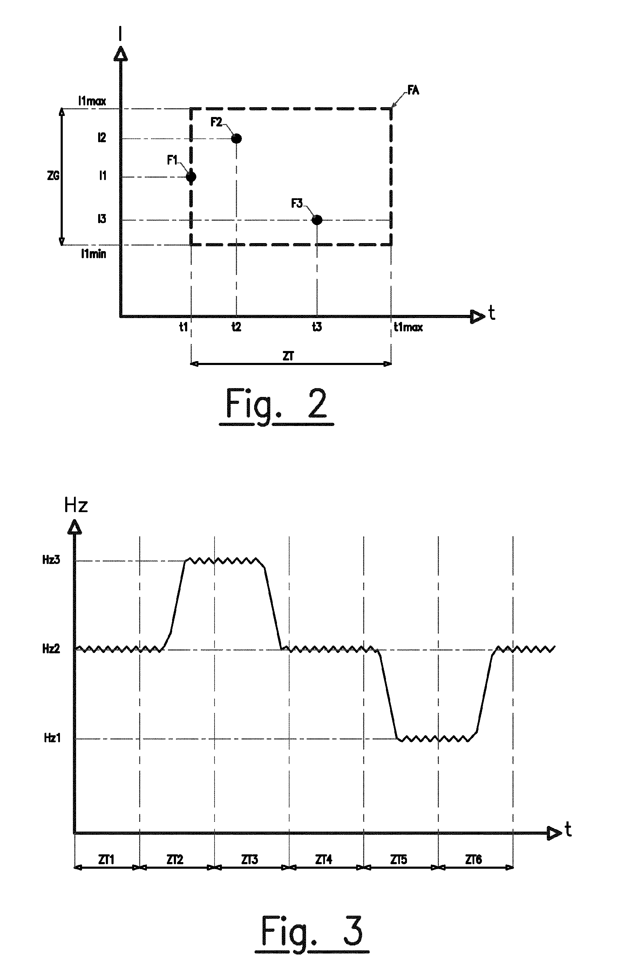

En se rapportant à la figure 2, la zone géographique ZG est définie autour du lieu où la photo et/ou la vidéo a été acquise, en prenant comme référence l'information de géo-localisation I1. Par exemple, la zone géographique ZG est définie dans un rayon compris entre 100 m et 10 km autour du point I1. Sur le diagramme de la figure 2, la zone géographique ZG est délimitée par les bornes I1ₘᵢₙ et I1ₘₐₓ autour du point I1.

De même, la zone temporaire ZT est définie à partir du moment où la photo et/ou la vidéo a été acquise, en prenant comme référence l'information d'horodatage t1. Par exemple, la zone temporaire ZT est comprise entre 1 min et 24 h à partir de l'instant t1. Sur le diagramme de la figure 2, la zone temporaire ZT est délimitée par les bornes t1 et t1ₘₐₓ.

Les autres utilisateurs U2, U3 acquièrent d'autres fichiers numériques F2, F3 photos et/ou vidéos, auxquels sont associées des informations de géo-localisation I2, I3 et d'horodatage t2, t3. Ces autres fichiers F2, F3 et les informations associées, respectivement I2, t2 et I3, t3, sont ensuite transférés au serveur distant S (figure 1). Ces étapes sont mises eu oeuvre au moyen des terminaux mobiles T2, T3, d'une manière similaire à celle décrite précédemment en référence au terminal mobile T1.

Pour signaler automatiquement un évènement, le serveur distant S va analyser la variation de la fréquence du nombre de fichiers reçus par le serveur dans la fenêtre d'analyse FA. La détection d'un évènement est donc basée sur la concentration des fichiers reçus par le serveur S, dans cette fenêtre d'analyse FA. En d'autres termes, on va étudier l'activité des utilisateurs dans cette fenêtre d'analyse. Cette analyse est préférentiellement effectuée au moyen d'un programme d'analyse enregistré dans le serveur distant S et dont les instructions permettent de réaliser les opérations décrites ci-après.

En se rapportant à l'exemple illustré sur la figure 2, le serveur distant S vérifie si les fichiers F2 et F3 doivent être pris en compte ou non. Par exemple, pour le fichier F2, si la donnée de géo-localisation I2 est incluse dans le segment [I1ₘᵢₙ - 1ₘₐₓ] et si la donnée temporelle t2 est incluse dans le segment [t1 - t1ₘₐₓ], alors le fichier F2 sera comptabilisé. Dans le cas inverse, si I2 n'appartient pas à [I1ₘᵢₙ - 1ₘₐₓ] et/ou si la donnée temporelle t2 n'appartient pas à [t1 - t1ₘₐₓ], alors le fichier F2 sera exclu de l'analyse. La même vérification s'impose au fichier F3 et de manière générale à tous les fichiers reçus par le serveur distant S.

De manière à affiner l'analyse de la variation de fréquence, il peut être avantageux de prendre en compte certaines habitudes liées à des lieux touristiques particuliers ou liées à certains utilisateurs.

Par exemple, le nombre de fichiers antérieurement envoyés au serveur distant S, depuis un lieu géographique pré-localisé, et en dehors de la fenêtre d'analyse FA, est un paramètre pris en compte par le programme d'analyse lors de l'identification d'une variation significative de la fréquence moyenne. Ces lieux géographiques pré-localisés sont typiquement des lieux touristiques, des enceintes sportives, des salles de spectacles, etc. Dans le cas de la tour Eiffel, il a préalablement été renseigné dans le serveur S, qu'une fréquence d'environ 150 photos/heure est une fréquence représentative d'une activité normale, non significative d'un évènement. Par contre, pour un lieu géographique non touristique, une telle fréquence serait représentative d'une activité anormale, et donc significative d'un évènement.

De même, le nombre de fichiers antérieurement envoyés par un utilisateur (par exemple l'utilisateur U2), au serveur distant S, et en dehors de la fenêtre d'analyse FA, peut être un paramètre pris en compte par le programme d'analyse lors de l'identification d'une variation significative de la fréquence moyenne. En effet, si l'utilisateur U2 a pour habitude d'avoir une fréquence de transfert de fichiers élevée, par exemple s'il a coutume d'acquérir 50 photos/heure à chaque visite d'un lieu géographique, hors événement particulier, les fichiers qu'il émettra pourraient fausser l'analyse de la variation de la fréquence du nombre de fichiers reçus par le serveur S. De fait, les fichiers émis par l'utilisateur U2 peuvent : soit être écartés de l'analyse, soit être affectés d'un coefficient pondérateur. Par exemple, le serveur S ne comptabilisera qu'un seul fichier par tranche de 50 fichiers reçus de l'utilisateur U2. Par contre, si l'activité habituelle normale de cet utilisateur est relativement basse, par exemple s'il a l'habitude d'acquérir 5 photos/heure à chaque visite d'un lieu géographique, hors événement particulier, alors une fréquence de 50 photos/heure associée à cet utilisateur, serait représentative d'une activité anormale, et donc significative d'un évènement.

La figure 3 montre un exemple d'évolution de la fréquence du nombre de fichiers reçus par le serveur S dans la fenêtre d'analyse FA. Plus particulièrement, le diagramme illustre, pour un lieu géographique donné (par exemple la tour Eiffel), un exemple de variation de la fréquence (Hz) des fichiers reçus par le serveur distant S en fonction du temps (t).

Dans la zone temporaire ZT1, les fichiers sont reçus par le serveur S à une fréquence moyenne Hz2. Cette fréquence est calculée par le serveur S, par exemple au moyen d'un algorithme d'analyse de probabilités. En reprenant le cas de la tour Eiffel à Paris (France), le serveur S reçoit par exemple normalement, entre 100 photos/heure et 200 photos/heure. La fréquence moyenne Hz2 est donc dans ce cas d'environ 150 photos/heure. Cette fréquence moyenne étant typique d'une activité normale, aucun évènement n'est détecté.

Dans la zone temporaire ZT2, un concert (ou un évènement sportif par exemple) a lieu au pied de la tour Eiffel. La fréquence des fichiers reçus augmente alors subitement pour atteindre une fréquence Hz3 (avec Hz3>Hz2) comprise par exemple entre 1000 photos/heure et 1500 photos/heure. Cette augmentation significative de la fréquence conduit le serveur S à signaler automatiquement un évènement.

Selon un mode préféré de réalisation, le serveur S identifie une variation significative de la fréquence moyenne Hz2 lorsque la fréquence varie d'un pourcentage prédéfini par rapport à ladite fréquence moyenne. Par exemple dès que la fréquence est supérieure (ou inférieure) à 100% de la fréquence moyenne Hz2.

Dans la zone temporaire ZT3, le concert (ou l'évènement sportif) prend fin. La fréquence des fichiers reçus diminue alors subitement pour redescendre à la valeur normale moyenne Hz2. Cette diminution significative de la fréquence peut éventuellement conduire le serveur S à signaler automatiquement la fin de l'évènement. En tout état de cause, cette diminution significative n'amène pas le serveur S à signaler un événement particulier, puisque la fréquence redevient normale.

Dans la zone temporaire ZT4, rien de particulier ne se passe au pied de la tour Eiffel. Les fichiers sont reçus par le serveur S à la fréquence moyenne normale Hz2. Le serveur S ne signalera aucun évènement.

Dans la zone temporaire ZT5, l'accès à la tour Eiffel est bloqué de sorte qu'aucun touriste ne peut y accéder. La fréquence des fichiers reçus diminue alors subitement pour atteindre une fréquence Hz1 (avec Hz1<Hz2) comprise par exemple entre 0 photo/heure et 10 photos/heure. Cette diminution significative de la fréquence conduit le serveur S à signaler automatiquement un évènement.

Dans la zone temporaire ZT6, l'accès à la tour Eiffel est de nouveau autorisé de sorte que les touristes affluent de nouveau. La fréquence des fichiers reçus augmente alors subitement pour atteindre la valeur normale moyenne Hz2. Cette augmentation significative de la fréquence peut éventuellement conduire le serveur S à signaler automatiquement la fin de l'évènement mais n'amènera pas le serveur S à signaler un nouvel événement particulier, puisque la fréquence redevient normale.

Dès lors que le serveur distant S détecte un événement, il peut associer une information caractéristique à tous les fichiers F1, F2, F3 reçus dans la fenêtre d'analyse FA, après et/ou immédiatement avant cet événement. Par exemple, des données numériques remarquables, du type correspondant au terme « EVENEMENT », pourront être associées à chacun de ces fichiers. En se référant à l'exemple illustré sur la figure 3, tous les fichiers reçus dans la zone temporaire ZT2 et dans la zone temporaire ZT5, sont associés à une information caractéristique. Tous ces fichiers marqués peuvent ensuite être regroupés dans une zone du serveur distant S, par exemple dans la zone mémoire Sm.

Selon une caractéristique avantageuse de l'invention permettant aux utilisateurs U1, U2, U3 d'être avertis d'un événement, le serveur distant S génère un signal d'avertissement Sa et, comme illustré sur la figure 1, le transmet à tous les terminaux mobiles T1, T2, T3 dont sont issus les fichiers F1, F2, F3 reçus dans la fenêtre d'analyse FA. De manière plus générale, ce signal d'avertissement Sa peut être transmis à tous les membres de la communauté ayant téléchargé, dans leur terminaux mobile, le programme informatique spécifique précité. De cette manière, même les membres de la communauté n'ayant pas participé activement à la signalisation d'un évènement (en particulier ceux ne se trouvant pas sur le lieu de l'évènement, et/ou ceux n'ayant pas acquis, ni transféré au serveur S, de fichier photo et/ou vidéo), sont avertis de cet évènement. Le signal d'avertissement Sa peut se présenter sous la forme d'un message sonore ou visuel, d'un mail, d'un SMS, d'un MMS, d'un lien sélectionnable, ou sous toute autre forme similaire.

La signalisation de l'évènement peut comprendre une étape alternative ou complémentaire consistant à générer, depuis le serveur distant S, une page internet Pi dédiée à l'évènement (figure 1). Cette page internet Pi est accessible à tous les utilisateurs et/ou à tous les membres de la communauté. Elle peut être visualisable directement depuis un écran des terminaux T1, T2, T3 ou depuis n'importe quel autre écran de terminal informatique. L'écran peut être du type écran plasma, écran LCD, etc. Les utilisateurs U1, U2, U3 peuvent accéder à cette page en sélectionnant sur un lien sélectionnable transmis par le serveur S, lequel lien correspond au signal d'avertissement Sa, ou en se connectant au serveur internet dédié à la communauté d'utilisateur. Ce serveur peut être le serveur distant S ou un autre serveur interconnecté audit serveur distant.

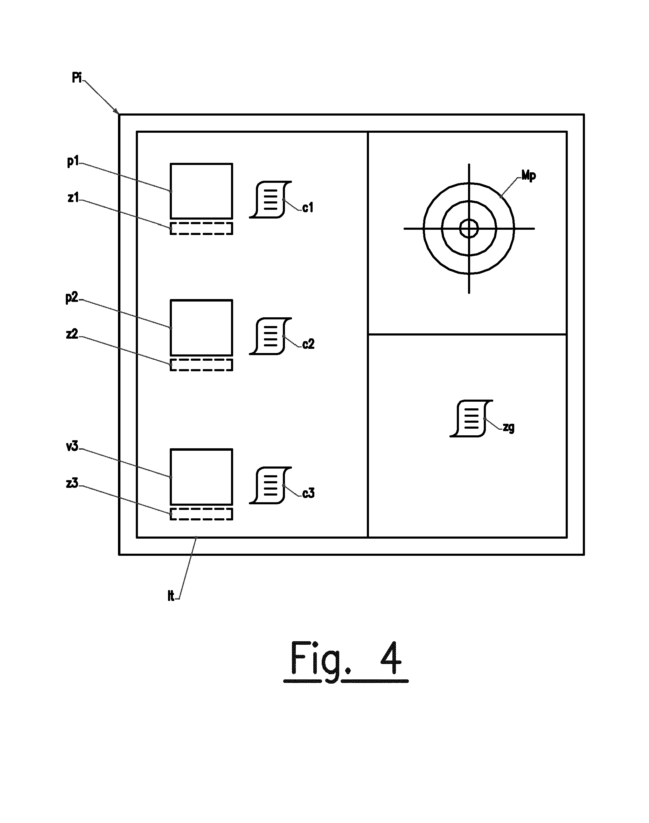

En se rapportant à la figure 4, la page internet Pi comprend une interface It sur laquelle sont visualisables toutes les photos p1, p2 et/ou vidéos v3 issues des fichiers F1, F2, F3 reçus dans la fenêtre d'analyse FA, durant l'événement. Une carte Mp permettant de localiser précisément l'évènement peut en outre être visualisée dans une région spécifique de l'interface It. Les commentaires c1, c2, c3, associés aux photos p1, p2 et/ou vidéos v3 et qui sont transmis en même temps que les autres données de géo-localisation et temporaires des fichiers, peuvent également être visualisés.

L'interface It peut également comprendre une zone zg permettant aux utilisateurs U1, U2, U3 ou autres membres de la communauté, de noter et/ou commenter l'événement. Ils peuvent notamment confirmer qu'il s'agit bien d'un évènement ou au contraire l'infirmer. Une ou plusieurs autres zones z1, z2, z3 sont encore prévues pour commenter les photos et/ou vidéos qui sont visualisables. Il s'agit en pratique de zones accessibles et sélectionnables à l'aide d'un pointeur, d'une souris ou d'un pavé tactile, et où chaque utilisateur peut écrire un commentaire en utilisant un clavier ou une commande vocale. Chaque commentaire peut éventuellement être préalablement contrôlé, par un organe modérateur, avant d'être publié sur la page internet Pi.

L'agencement des différents éléments du système dans les modes de réalisation décrits ci-dessus ne doit pas être compris comme exigeant un tel agencement dans toutes les implémentations. En tout état de cause, on comprendra que diverses modifications peuvent être apportées au système et au procédé, sans s'écarter de l'esprit et de la portée de l'invention.

## Revendications

1. Procédé pour signaler automatiquement un évènement à partir de fichiers (F1, F2, F3) reçus sur un serveur informatique (S), ledit procédé consistant à:
- acquérir, sous forme de fichier numérique (F1), une photo et/ou vidéo depuis un terminal mobile (T1),
- associer au fichier (F1) acquis :
○ une information de géo-localisation (I1) pour localiser le lieu où la photo et/ou la vidéo a été acquise,
○ une information d'horodatage (t1) pour associer une date et une heure au moment où ladite photo et/ou ladite vidéo a été acquise,
- transférer le fichier (F1) et les informations de géo-localisation (I1) et d'horodatage (t1) associées, vers un serveur informatique (S) distant du terminal mobile (T1),
**se caractérisant par le fait que** ledit procédé comprend en outre les étapes consistant à :
- créer, dans le serveur distant (S), une fenêtre d'analyse (FA) qui détermine :
○ une zone géographique (ZG) définie autour du lieu où la photo et/ou la vidéo a été acquise, ladite zone géographique étant définie en prenant comme référence l'information de géo-localisation (I1),
○ une zone temporaire (ZT) définie à partir du moment où la photo et/ou la vidéo a été acquise, ladite zone temporaire étant définie en prenant comme référence l'information d'horodatage (t1),
- acquérir d'autres fichiers (F2, F3) numériques photos et/ou vidéos et leur associer des informations de géo-localisation (I2, I3) et d'horodatage (t2, t3), puis transférer ces fichiers (F2, F3) et ces informations (I2, I3, t2, t3) au serveur distant (S),
- analyser la variation de la fréquence du nombre de fichiers reçus par le serveur distant (S) dans la fenêtre d'analyse (FA), pour signaler automatiquement un évènement.

2. Procédé selon la revendication 1, dans lequel l'analyse de la variation de la fréquence du nombre de fichiers reçus par le serveur distant (S) dans la fenêtre d'analyse (FA), comprend la succession d'étapes suivantes:
- détermination d'une fréquence moyenne (Hz2) des fichiers reçus dans la fenêtre d'analyse,
- identification d'une variation significative de la fréquence moyenne lorsque la fréquence des fichiers reçus dans la fenêtre d'analyse (FA) varie d'un pourcentage prédéfini par rapport à ladite fréquence moyenne (Hz2).

3. Procédé selon la revendication 2, dans lequel le nombre de fichiers antérieurement envoyés par un utilisateur, au serveur distant (S), et en dehors de la fenêtre d'analyse (FA), est un paramètre pris en compte pour l'identification d'une variation significative de la fréquence moyenne (Hz2).

4. Procédé selon l'une des revendications 2 ou 3, dans lequel le nombre de fichiers antérieurement envoyés par un utilisateur au serveur distant (S), depuis un lieu géographique pré-localisé, et en dehors de la fenêtre d'analyse (FA), est un paramètre pris en compte pour l'identification d'une variation significative de la fréquence moyenne (Hz2).

5. Procédé selon la revendication 4, consistant à écarter de l'analyse les fichiers émis par un utilisateur qui a pour habitude d'avoir une fréquence de transfert de fichiers élevée.

6. Procédé selon la revendication 4, consistant à affecter un coefficient pondérateur aux fichiers émis par un utilisateur qui a pour habitude d'avoir une fréquence de transfert de fichiers élevée.

7. Procédé selon l'une des revendications précédentes, dans lequel l'étape de signalisation automatique d'un évènement comprend une étape consistant à associer une information caractéristique à tous les fichiers (F1, F2, F3) reçus dans la fenêtre d'analyse (FA), après et/ou immédiatement avant cet événement.

8. Procédé selon la revendication 7 dans lequel l'étape de signalisation automatique d'un évènement comprend une étape consistant à regrouper dans une zone (Sm) du serveur distant (S), tous les fichiers (F1, F2, F3) qui sont associés à l'information caractéristique.

9. Procédé selon l'une des revendications précédentes, dans lequel l'étape de signalisation automatique d'un évènement comprend une étape d'avertissement consistant à générer, depuis le serveur distant (S), un signal d'avertissement (Sa) et à transmettre ce signal à tous les terminaux mobiles (T1, T2, T3) dont sont issus les fichiers reçus (F1, F2, F3) dans la fenêtre d'analyse (FA).

10. Procédé selon l'une des revendications précédentes, dans lequel l'étape de transfert des fichiers (F1, F2, F3) et des informations de géo-localisation (I1, I2, I3) et d'horodatage (t1, t2, t3) associées, vers le serveur distant (S), se fait au moyen d'un programme informatique enregistré dans les terminaux mobiles (T1, T2, T3), lequel programme est téléchargé dans lesdits terminaux suite à la connexion de ces derniers à un serveur Internet.

11. Procédé selon la revendication 10, dans lequel l'étape de signalisation automatique d'un évènement comprend une étape consistant à générer, depuis le serveur distant (S), un signal d'avertissement (Sa) et à transmettre ce signal à tous les terminaux mobiles (T1, T2, T3) dans lesquels est enregistré ledit programme informatique.

12. Procédé selon l'une des revendications précédentes, dans lequel l'étape de signalisation automatique d'un évènement comprend une étape d'avertissement consistant à générer, depuis le serveur distant (S), une page internet (Pi) dédiée à l'évènement, laquelle page comprend une interface (It) sur laquelle sont visualisables toutes les photos (p1, p2) et/ou vidéos (v3) issues des fichiers (F1, F2, F3) reçus dans la fenêtre d'analyse (FA), durant l'événement.

13. Procédé selon la revendication 12, dans lequel l'interface (It) de la page internet (Pi) dédiée à l'évènement comprend une zone (zg) permettant de noter et/ou commenter ledit événement et/ou une ou plusieurs zones (z1, z2, z3) permettant de noter et/ou commenter chaque photo (p1, p2) et/ou vidéo (v3) visualisable.

14. Procédé selon l'une des revendications précédentes, dans lequel en complément des informations de géo-localisation (I1, I2, I3) et des informations d'horodatage (t1, t2, t3) associées aux fichiers (F1, F2, F3) photos et/ou vidéos, des informations de commentaires (c1, c2, c3) sont associées auxdits fichiers.

15. Système pour signaler automatiquement un évènement à partir de fichiers (F1, F2, F3) reçus sur un serveur informatique(S), ledit système comprenant :
- des terminaux mobiles (T1, T2, T3) intégrant :
○ un moyen (C1, C2, C3) pour acquérir, sous forme de fichier numérique (F1, F2, F3), une photo et/ou une vidéo,
○ un programme informatique comprenant des instructions pour générer une information de géo-localisation (I1, I2, I3) pour localiser le lieu où la photo et/ou la vidéo a été acquise, et pour générer une information d'horodatage (t1, t2, t3) pour associer une date et une heure au moment où ladite photo et/ou ladite vidéo a été acquise,
○ un moyen pour transférer le fichier (F1, F2, F3) photo et/ou vidéo et les informations de géo-localisation (I1, I2, I3) et d'horodatage (t1, t2, t3) associées, vers un serveur informatique (S) distant des terminaux mobiles,
- le serveur distant (S) intégrant un programme informatique comprenant des instructions pour :
○ créer une fenêtre d'analyse (FA) qui dépend :
■ d'une zone géographique (ZG) définie autour du lieu où la première photo et/ou vidéo a été acquise, ladite zone géographique étant définie en prenant comme référence l'information de géo-localisation (I1) associée à ladite première photo et/ou vidéo,
■ d'une zone temporaire (ZT) définie à partir du moment où la première photo et/ou la vidéo a été acquise, ladite zone temporaire étant définie en prenant comme référence l'information d'horodatage (t1) associée à ladite première photo et/ou vidéo,
○ analyser la variation de la fréquence du nombre de fichiers reçus par le serveur distant dans la fenêtre d'analyse, pour signaler automatiquement un évènement.
